# EUROPEAN PATENT SPECIFICATION

(11) **EP 3 982 562 B1**
(45) Date of publication and mention of the grant of the patent: **29.04.2026**
(21) Application number: 19934479.7
(22) Date of filing: 27.06.2019
(51) Int. Cl.: H04B 10/564, H04B 10/50, H04B 10/079

(54) **OPTICAL POWER REGULATION METHOD AND DEVICE**
VERFAHREN UND VORRICHTUNG ZUR OPTISCHEN LEISTUNGSREGELUNG
PROCÉDÉ ET DISPOSITIF DE RÉGULATION DE PUISSANCE OPTIQUE

(43) Date of publication of application: 13.04.2022
(73) Proprietor: Huawei Technologies Co., Ltd., Longgang District Shenzhen, Guangdong 518129 (CN)
(72) Inventor: ZHOU, Chi, Shenzhen, Guangdong 518129 (CN); JIANG, Qun, Shenzhen, Guangdong 518129 (CN); CHEN, Zhangqi, Shenzhen, Guangdong 518129 (CN)
(74) Representative: Gill Jennings & Every LLP
(86) International application number: PCT/CN2019/093148
(87) International publication number: WO 2020/258114

(56) References cited:
- CN-A- 101 615 956
- CN-A- 101 615 956
- CN-A- 102 136 869
- CN-A- 105 306 145
- JP-A- 2007 221 517
- JP-A- 2012 151 739
- US-A1- 2019 036 599
- US-B1- 6 317 231

## Description

### TECHNICAL FIELD

This application relates to the opto-electronic field, and in particular, to an optical power adjustment method and an apparatus.

### BACKGROUND

Dense wavelength division multiplexing (Dense Wavelength Division Multiplexing, DWDM) is a wavelength division multiplexing (Wavelength Division Multiplexing, WDM) technology for expanding a transmission capacity of an existing fiber optic network. A plurality of optical carrier signals can be multiplexed through the DWDM onto one optical fiber for transmission. This can save a lot of optical fiber resources in a long-distance transmission application. Currently, there are two types of DWDM systems: a passive DWDM system and an active DWDM system.

Active components such as an optical fiber amplifier and a dispersion compensator are not used in the passive DWDM system. Therefore, if insertion loss of a multiplexer/demultiplexer and a fiber link is small, receive optical power may exceed an over-saturation point. This affects receiving performance and even damages a receiver.

CN 101615956A discloses a method for optical power adjustment, which comprises the following steps: when an ONU receives downlink data, monitoring downlink receiving optical power or bit error rate; according to a normal variation range of downlink receiving optical power or bit error rate acquired in advance, judging whether the downlink receiving optical power or the bit error rate acquired by monitoring exceed the normal variation range; and when the downlink receiving optical power or the bit error rate exceed the normal variation range, adjusting uplink sending optical power through the ONU.

US 6317231 B1 discloses the performance of monitoring and maintenance functions within a wavelength-division-multiplexed optical network having a Network Control Element in which optical-to-electrical and electrical-to-optical signal conversion is substantially eliminated by detecting optical intensities of signals conveyed over wavelength channels at the optical layer.

JP 2012 151739 A discloses an optical communication apparatus, and a configuration for adjusting the output optical level of an optical module of an interface board and an optical module of a subscriber-side line terminator without inserting an optical attenuator.

JP 2007 221517 A discloses a passive optical network system where flexible design is possible by varying the amount of light (power) output from an optical module.

### SUMMARY

Embodiments of this application provide an optical power adjustment method and an apparatus, to adjust optical power of an optical signal sent by a transmit end, so that the optical power does not exceed an optical over-saturation point of a receive end and therefore receiving performance of the receive end is ensured.

According to a first aspect, an embodiment of this application provides an optical power adjustment method. The method is applied to a passive DWDM optical transmission system, where the optical transmission system includes at least a first optical module and a second optical module, and out-of-band communication is established between the first optical module and the second optical module. In the first aspect, description is provided from a perspective that the first optical module is a transmit end. This embodiment of this application specifically includes: The first optical module sends a first optical signal to the second optical module, where the first optical signal carries query information, and the query information is used to indicate the second optical module to feed back, to the first optical module, a receive optical power value of the second optical module for the first optical signal. Then, the first optical module receives the receive optical power value, and determines, based on the receive optical power value, second transmit optical power for sending a second optical signal. Finally, the first optical module sends the second optical signal to the second optical module based on the second transmit optical power.

In this embodiment of this application, the second optical signal also carries query information, where the query information is used to indicate the second optical module to feed back, to the first optical module, a receive optical power value of the second optical module for the second optical signal. Then, the first optical module receives the receive optical power value of the second optical module for the second optical signal, and determines, based on the receive optical power value of the second optical module for the second optical signal, third transmit optical power for sending a third optical signal. Finally, the first optical module sends the third optical signal to the second optical module based on the third transmit optical power. In this way, a function of adjusting transmit optical power in real time is implemented between the first optical module and the second optical module.

In this embodiment of this application, the first optical module obtains a receive optical power value of the second optical module for an optical signal, and then adjusts the transmit optical power in real time based on the receive optical power value, so that the optical power does not exceed an optical over-saturation point of a receive end. Therefore, receiving performance of the optical module at the receive end in the optical transmission system is ensured.

The query information is carried by a pilot tone signal. That is, when the first optical module sends an optical signal to the second optical module, the optical signal includes a high-speed signal that carries service data and a pilot tone signal that carries query information.

Optionally, that the first optical module determines a second transmit optical power based on the receive optical power value includes: When the receive optical power value is greater than an enabling threshold, the first optical module rolls back first transmit optical power by a target value to obtain the second transmit optical power; when the receive optical power value is less than a disabling threshold, the first optical module restores the first transmit optical power to initial transmit optical power, in other words, the initial transmit optical power is used as the second transmit optical power, where the initial transmit optical power is transmit optical power used when the first optical module works normally (namely, transmit optical power of the first optical module before delivery); or when the receive transmit optical power is greater than or equal to the disabling threshold, and is less than or equal to the enabling threshold, the first optical module uses the first transmit optical power as the second transmit optical power. It may be understood that the enabling threshold is a threshold used to limit whether the first optical module enables an optical power adjustment function, and the disabling threshold is a threshold used to limit whether the first optical module disables the optical power adjustment function. In this way, a capability of the first optical module for adjusting the transmit optical power may be effectively improved, and an adjustment range is increased.

Optionally, when the first optical module rolls back the first transmit optical power based on the target value, the target value may be a fixed value that is preset. Alternatively, the target value may be determined based on the receive optical power value and the receiving performance of the second optical module, that is, the target value is dynamically adjustable.

Optionally, when the first optical module is powered on, the first optical module rolls back the initial transmit optical power based on a preset value to obtain preset transmit optical power. In other words, when the first optical module starts to work, the transmit optical power is directly rolled back to the preset transmit optical power. In this way, it may be ensured that the transmit optical power of the first optical module satisfies the receive optical power value of the second optical module with a high probability from an initial working moment. This reduces an adjustment amount for the first optical module.

According to a second aspect, an embodiment of this application provides an optical power adjustment method. The method is applied to a passive DWDM optical transmission system, where the optical transmission system includes a first optical module and a second optical module, and out-of-band communication is established between the first optical module and the second optical module. In the second aspect, description is provided from a perspective that the second optical module is a receive end. This embodiment of this application specifically includes: The second optical module receives a first optical signal that is sent by the first optical module based on first transmit optical power, where the first optical signal carries query information, and the query information is used to indicate the second optical module to feed back a receive optical power value for the first optical signal. Then, after the first optical module determines, based on the receive optical power value, second transmit optical power for sending a second optical signal, the second optical module receives the second optical signal that is sent by the first optical module based on the second transmit optical power.

In this embodiment of this application, the second optical signal also carries query information. After receiving the query information, the second optical module sends, to the first optical module, a receive optical power value of the second optical module for receiving the second optical signal. Then, the first optical module determines transmit optical power for the first optical signal based on the receive optical power value of the second optical module for the second optical signal. In this way, a function of adjusting transmit optical power in real time is implemented between the first optical module and the second optical module.

In this embodiment of this application, the second optical module feeds back receive optical power value of the second optical module for an optical signal in real time, so that the first optical module adjusts the transmit optical power in real time based on the receive optical power value of the second optical module for the optical signal, and the optical power does not exceed an optical over-saturation point of the receive end. Therefore, receiving performance of the optical module at the receive end in the optical transmission system is improved.

The query information is carried by a pilot tone signal. That is, when the first optical module sends an optical signal to the second optical module, the optical signal includes a high-speed signal that carries service data and a pilot tone signal that carries query information.

According to a third aspect, an embodiment of this application provides an optical transmitting apparatus. The apparatus has a function of implementing behavior of the first optical module according to the first aspect or the second aspect. The function may be implemented by hardware, or may be implemented by hardware executing corresponding software. The hardware or the software includes one or more modules corresponding to the foregoing function.

In a possible implementation, the apparatus includes units or modules configured to perform the steps according to the first aspect or the second aspect. For example, the apparatus includes: a sending module, configured to send a first optical signal to a second optical apparatus based on first transmit optical power, where the first optical signal carries query information, and the query information is used to indicate the second optical apparatus to feed back a receive optical power value for the first optical signal; a receiving module, configured to receive the receive optical power value sent by the second optical apparatus; and a processing module, configured to determine second transmit optical power based on the receive optical power value, where the sending module is configured to send a second optical signal to the second optical apparatus based on the second transmit optical power.

The query information is carried by a pilot tone signal, and the pilot tone signal is included in the first optical signal. Optionally, the processing module is specifically configured to: when the receive optical power value is greater than an enabling threshold, roll back the first transmit optical power by a target value to obtain the second transmit optical power; when the receive optical power value is less than a disabling threshold, restore the first transmit optical power to initial transmit optical power, where the initial transmit optical power is used as the second transmit optical power, and the initial transmit optical power is transmit optical power on which the optical transmitting apparatus performs no rollback; or when the receive optical power value is greater than or equal to the disabling threshold and less than or equal to the enabling threshold, use the first transmit optical power as the second transmit optical power.

In a possible implementation, the apparatus includes a processor and a transceiver. The processor is configured to support the first optical module in performing a corresponding function in the method according to the first aspect or the second aspect. The transceiver is configured to indicate communication between the first optical module and the second optical module, and send information or instructions in the foregoing method to the second optical module. Optionally, the apparatus may further include a memory. The memory is configured to be coupled to the processor, and stores program instructions and data that are necessary for the first optical module.

In a possible implementation, when the apparatus is a chip of the first optical module, the chip includes a processing module and a transceiver module. The processing module may be, for example, a processor, and the processor is configured to determine second transmit optical power based on a receive optical power value. The transceiver module may be, for example, an input/output interface, a pin, or a circuit on the chip, and receives the receive optical power value sent by the second optical module or transmits the second transmit optical power generated by the processor to another chip or module coupled to the chip. The processing module may execute computer-executable instructions stored in a storage unit, to support the first optical module in performing a corresponding function in the method according to the first aspect or the second aspect. Optionally, the storage unit may be a storage unit in the chip, for example, a register or a cache. The storage unit may alternatively be a storage unit that is located outside the chip, for example, a read-only memory (read-only memory, ROM), another type of static storage device that can store static information and instructions, or a random access memory (random access memory, RAM).

The processor mentioned anywhere above may be a general-purpose central processing unit (Central Processing Unit, CPU), a microprocessor, an application-specific integrated circuit (application-specific integrated circuit, ASIC), or one or more integrated circuits configured to control program execution of the optical power adjustment method in the foregoing aspects.

According to a fourth aspect, an embodiment of this application provides an optical receiving apparatus. The apparatus has a function of implementing behavior of the second optical module according to the first aspect or the second aspect. The function may be implemented by hardware, or may be implemented by hardware executing corresponding software. The hardware or the software includes one or more modules corresponding to the foregoing function.

In a possible implementation, the apparatus includes units or modules configured to perform the steps according to the first aspect or the second aspect. For example, the apparatus includes: a receiving module, configured to receive a first optical signal that is sent by a first optical apparatus based on first transmit optical power, where the first optical signal carries query information, and the query information is used to indicate the optical receiving apparatus to feed back a receive optical power value for the first optical signal; and a sending module, configured to send the receive optical power value to the first optical apparatus, where the receiving module is configured to receive a second optical signal, where the second optical signal is sent by the first optical apparatus based on second transmit optical power, and the second transmit optical power is determined by the first optical apparatus based on the receive optical power value.

The query information is carried by a pilot tone signal, and the pilot tone signal is included in the first optical signal. In a possible implementation, the apparatus includes a processor and a transceiver. The processor is configured to support the second optical module in performing a corresponding function in the method according to the first aspect or the second aspect. The transceiver is configured to indicate communication between the second optical module and the first optical module, and send information or instructions in the foregoing method to the first optical module. Optionally, the apparatus may further include a memory. The memory is configured to be coupled to the processor, and stores program instructions and data that are necessary for the second optical module.

In a possible implementation, when the apparatus is a chip of the optical receiving apparatus, the chip includes a processing module and a transceiver module. The processing module may be, for example, a processor. The transceiver module may be, for example, an input/output interface, a pin, or a circuit on the chip, and receives a first optical signal sent by the first optical module or transmits a receive optical power value generated by the processor to another chip or module coupled to the chip. The processing module may execute computer-executable instructions stored in a storage unit, to support the second optical module in performing a corresponding function in the method according to the first aspect or the second aspect. Optionally, the storage unit may be a storage unit in the chip, for example, a register or a cache. The storage unit may alternatively be a storage unit that is located outside the chip, for example, a read-only memory (read-only memory, ROM), another type of static storage device that can store static information and instructions, or a random access memory (random access memory, RAM).

The processor mentioned anywhere above may be a general-purpose central processing unit (Central Processing Unit, CPU), a microprocessor, an application-specific integrated circuit (application-specific integrated circuit, ASIC), or one or more integrated circuits configured to control program execution of the optical power adjustment method in the foregoing aspects.

According to a fifth aspect, an embodiment of this application provides a computer-readable storage medium. The computer storage medium stores computer instructions, and the computer instructions are used to perform the method according to the first aspect or the second aspect.

According to a sixth aspect, an embodiment of this application provides a computer program product including instructions. When a computer program product runs on a computer, the computer is enabled to perform the method according to the first aspect or the second aspect.

According to a seventh aspect, an embodiment of this application provides a passive DWDM optical transmission system, including the optical transmitting apparatus according to the third aspect and the optical receiving apparatus according to the fourth aspect, where the optical transmitting apparatus and the optical receiving apparatus respectively perform the methods according to the first aspect and the second aspect.

### BRIEF DESCRIPTION OF DRAWINGS

FIG. 1 is a schematic diagram of a passive DWDM optical transmission system;
FIG. 2 is a schematic diagram of an application scenario of an optical power adjustment method according to an embodiment of this application;
FIG. 3 is a schematic diagram of an embodiment of an optical power adjustment method according to embodiments of this application;
FIG. 4 is a schematic diagram of a principle of out-of-band communication according to an embodiment of this application;
FIG. 5 is a schematic flowchart of an optical power adjustment method according to an embodiment of this application;
FIG. 6 is a schematic diagram of an embodiment of an optical transmitting apparatus according to the embodiments of this application;
FIG. 7 is a schematic diagram of another embodiment of an optical transmitting apparatus according to the embodiments of this application;
FIG. 8 is a schematic diagram of an embodiment of an optical receiving apparatus according to the embodiments of this application;
FIG. 9 is a schematic diagram of another embodiment of an optical receiving apparatus according to the embodiments of this application; and
FIG. 10 is a diagram of an embodiment of an optical transmission system according to the embodiments of this application.

### DESCRIPTION OF EMBODIMENTS

Embodiments of this application provide an optical power adjustment method and an apparatus, to adjust optical power of an optical signal sent by a transmit end, so that the optical power does not exceed an optical over-saturation point of a receive end and therefore receiving performance of the receive end is ensured.

In the specification, claims, and accompanying drawings of this application, the terms "first", "second", "third", "fourth", and the like (if existent) are intended to distinguish between similar objects but do not necessarily indicate a specific order or sequence. It should be understood that data used in such a way are interchangeable in proper circumstances, so that the embodiments described herein can be implemented in an order other than orders illustrated or described herein. Moreover, the terms "include", "comprise", and any other variants mean to cover non-exclusive inclusion, for example, a process, method, system, product, or device that includes a list of steps or units is not necessarily limited to those expressly listed steps or units, but may include other steps or units not expressly listed or inherent to such a process, method, product, or device.

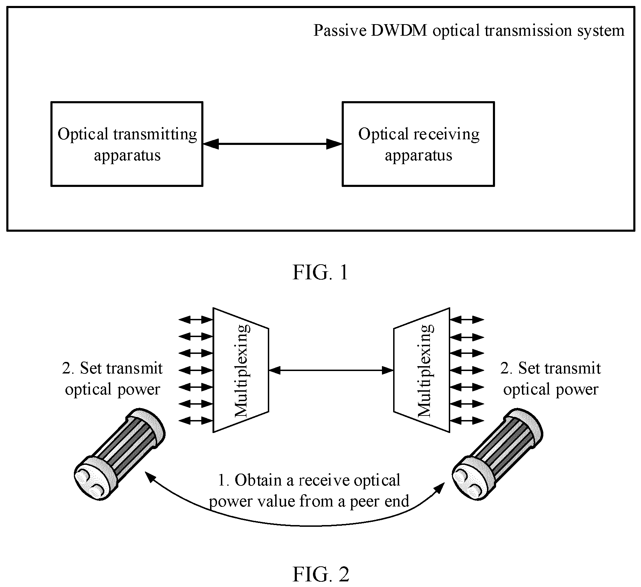

The technical solutions provided in the embodiments of this application are applied to a passive DWDM optical transmission system. FIG. 1 shows an example of an application scenario according to an embodiment of this application. The passive DWDM optical transmission system includes at least a pair of an optical transmitting apparatus and an optical receiving apparatus. The optical transmitting apparatus sends an optical signal to the optical receiving apparatus. Because active components such as an optical fiber amplifier and a dispersion compensator are not used in the passive DWDM optical transmission system, if insertion loss of a multiplexer/demultiplexer and a fiber link is small, a receive optical power value may be greater than an over-saturation point. This affects receiving performance and even damages a receiver.

As shown in FIG. 2, in an example of an application scenario, two optical modules in pairs each need to obtain a receive optical power value of the other, and, sets its own transmit optical power based on the receive optical power value of the other when serving as an optical module at a transmit end. Based on the foregoing architecture, the embodiments of this application provide the following technical solution: A first optical module sends a first optical signal to a second optical module, where the first optical signal carries query information, and the query information is used to indicate the second optical module to feed back, to the first optical module, a receive optical power value of the second optical module for the first optical signal. Then, the first optical module receives the receive optical power value, and determines, based on the receive optical power value, second transmit optical power for sending a second optical signal. Finally, the first optical module sends the second optical signal to the second optical module based on the second transmit optical power.

Persons skilled in the art may understand that the optical transmitting apparatus in the embodiments of this application may be a component, for example, a laser, an optical module, or an optical transceiver, and is not specifically limited herein. In addition, it may be understood that the optical transmitting apparatus and the optical receiving apparatus in the embodiments of this application may be optical components having a same structure and function. In other words, the optical transmitting apparatus has a function of the optical receiving apparatus, and the optical receiving apparatus also has a function of the optical transmitting apparatus.

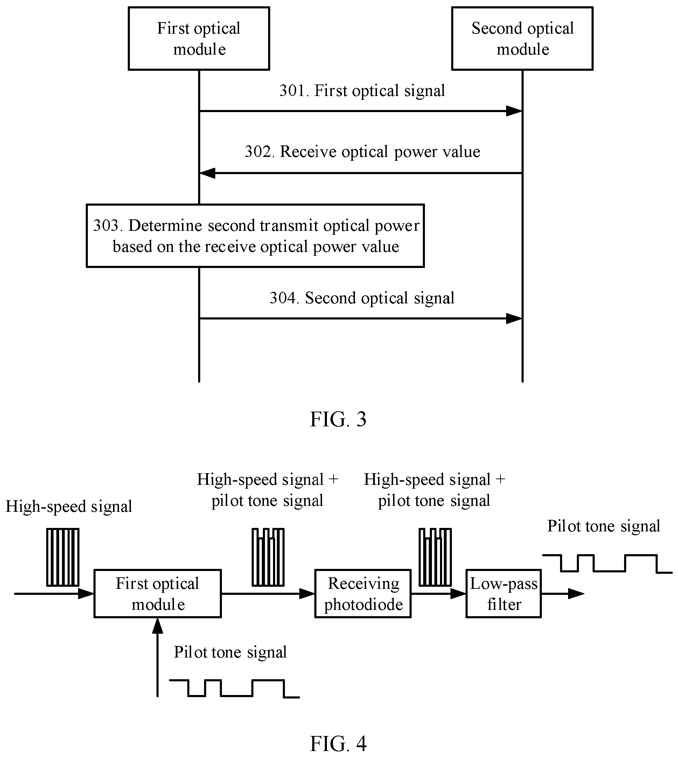

The following describes the technical solutions in the embodiments of this application with reference to more accompanying drawings. FIG. 3 shows an optical power adjustment method according to an embodiment of this application. The method includes the following steps.

301. A first optical module sends a first optical signal to a second optical module, where the first optical signal carries query information, and the query information is used to indicate the second optical module to feed back a receive optical power value for the first optical signal.

After an optical transmission system runs, out-of-band communication is established between the first optical module and the second optical module in the optical transmission system. Therefore, when the first optical module sends the first optical signal to the second optical module, the first optical signal carries the query information, and the query information is used to indicate the second optical module to feed back the receive optical power value of the second optical module for the first optical signal.

In this embodiment, a principle of establishing the out-of-band communication between the first optical module and the second optical module is shown in FIG. 4. The query information is carried in a pilot tone signal, and the first optical module modulates, into the first optical signal, a high-speed signal that carries service data and the pilot tone signal that carries the query information. Then, the first optical module sends the first optical signal to the second optical module. After a receiving photodiode in the second optical module receives the first optical signal, the receiving photodiode converts the first optical signal into an electrical signal. Then, the second optical module restores, by using a low-pass filter, the pilot tone signal from the electrical signal that is converted from the first optical signal, to obtain the query information.

302. The second optical module feeds back the receive optical power value to the first optical module based on the query information.

After receiving the first optical signal, the second optical module obtains the receive optical power value of the second optical module for the first optical signal. Then, the second optical module feeds back the receive optical power value to the first optical module based on the query information.

It may be understood that the second optical module may feed back the receive optical power value to the first optical module through the out-of-band communication function. A specific implementation process is the same as the principle shown in FIG. 4.

303. The first optical module determines second transmit optical power based on the receive optical power value. After obtaining the receive optical power value, the first optical module determines, based on the receive optical power value, the second transmit optical power of the first optical module for sending a second optical signal.

In this embodiment, when the first optical module determines the second transmit optical power based on the receive optical power value, the following solution may be specifically used: When the first optical module obtains the receive optical power value, the first optical module compares the receive optical power value with an enabling threshold and a disabling threshold. If the receive optical power value is greater than the enabling threshold, the first optical module rolls back first transmit optical power by a target value to obtain the second transmit optical power; if the receive optical power value is less than the disabling threshold, the first optical module restores the first transmit optical power to initial transmit optical power of the first optical module, and uses the initial transmit optical power as the second transmit optical power, where the initial transmit optical power is transmit optical power on which the first optical module performs no rollback; or if the receive optical power value is greater than or equal to the disabling threshold and is less than or equal to the enabling threshold, the first optical module uses the first transmit optical power as the second transmit optical power. It may be understood that the enabling threshold and the disabling threshold indicate a range that is of the receive optical power value and that is determined by a user based on receiving performance of the optical module. For example, it is assumed in this embodiment that the enabling threshold of the optical module is -3 dBm (decibel-milliwatt), and the disabling threshold is -10 dBm. If the receive optical power value of the second optical module for the first optical signal is -2 dBm, the first optical module may roll back the first transmit optical power based on the target value to obtain the second transmit optical power (that is, reduce the transmit optical power); if the receive optical power value of the second optical module for the first optical signal is -11 dBm, the first optical module may restore the first transmit optical power to the initial transmit optical power of the first optical module (that is, restore the first transmit optical power to the transmit optical power on which the first optical module performs no rollback, namely, transmit optical power that is set before delivery of the first optical module); or if the receive optical power value of the second optical module for the first optical signal is -5 dBm, the first optical module may remain in a current state, and the first optical module uses the first transmit optical power as the second transmit optical power.

In this embodiment, the target value may be a fixed value preset by the user. Alternatively, the target value may be determined based on the receive optical power value and the receiving performance of the second optical module, that is, the target value is a dynamically adjusted value. For example, when the first optical module needs to perform rollback on the first transmit optical power, the first optical module may directly perform rollback by 3 dBm or by 5 dBm. Alternatively, if the receive optical power value is -1 dBm, the first optical module determines that the target value is 2 dBm; or if the receive optical power value is 4 dBm, the first optical module determines that the target value is 6 dBm.

In this embodiment, when the first optical module initially runs (in other words, when the first optical module is powered on), the first optical module rolls back the initial transmit optical power based on a preset value to obtain preset transmit optical power. In other words, when the first optical module starts to work, the initial transmit optical power is directly rolled back to the preset transmit optical power. In this way, it may be ensured that the transmit optical power of the first optical module satisfies the receive optical power value of the second optical module with a high probability from an initial working moment. This reduces an adjustment amount for the first optical module.

304. The first optical module sends a second optical signal to the second optical module based on the second transmit optical power.

When the first optical module determines the second transmit optical power, the first optical module sends the second optical signal to the second optical module based on the second transmit optical power.

It may be understood that the second optical signal also carries query information, where the query information is used to indicate the second optical module to feed back, to the first optical module, a receive optical power value of the second optical module for the second optical signal. Then, the first optical module receives the receive optical power value of the second optical module for the second optical signal, and determines, based on the receive optical power value of the second optical module for the second optical signal, third transmit optical power for sending a third optical signal. Finally, the first optical module sends the third optical signal to the second optical module based on the third transmit optical power. In this way, a function of adjusting the transmit optical power in real time is implemented between the first optical module and the second optical module.

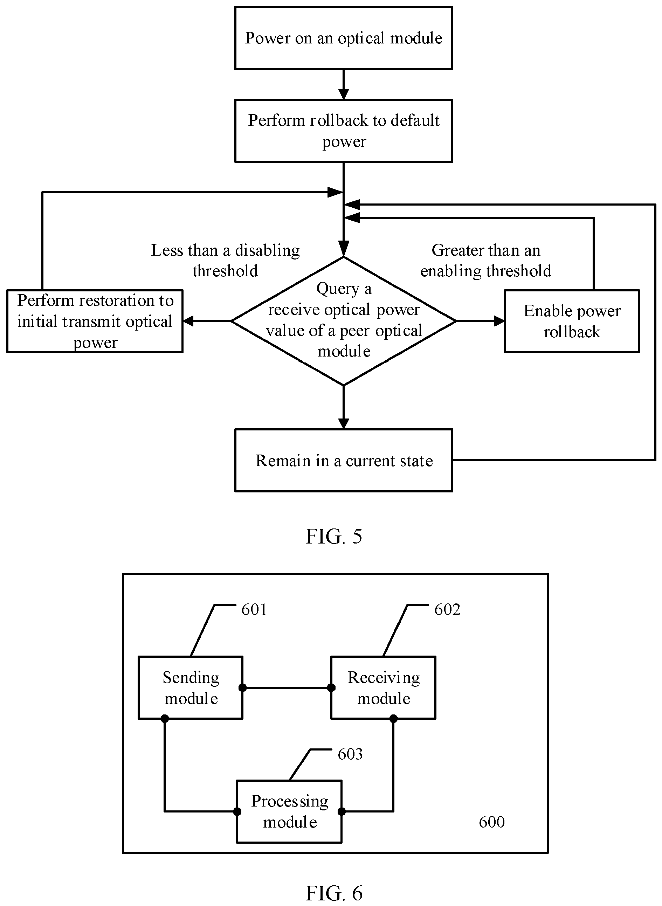

The following describes this embodiment of this application by using an example of an application scenario. As shown in FIG. 5, after an optical module in an optical transmission system is powered on, the optical module performs power rollback on transmit optical power to obtain preset transmit optical power. Then, the optical module sends an optical signal to a peer optical module, and queries a receive optical power value of the peer optical module for the optical signal. If the receive optical power value is greater than an enabling threshold, the optical module performs rollback on the preset transmit optical power; if the receive optical power value is less than a disabling threshold, the optical module disables power rollback, so that the preset transmit optical power of the optical module is restored to initial transmit optical power; or if the receive optical power value falls between the enabling threshold and the disabling threshold, the optical module maintains the current transmit optical power. In addition, the optical module in the optical transmission system cyclically queries the receive optical power value of the peer optical module.

In this embodiment of this application, the first optical module obtains a receive optical power value of the second optical module for an optical signal, and then can adjust transmit optical power in real time based on the receive optical power value, so that the optical power does not exceed an optical over-saturation point of a receive end. Therefore, the receiving performance of the optical module at the receive end in the optical transmission system is improved. The optical power adjustment method in the embodiments of this application is described above. The following describes an optical transmitting apparatus and an optical receiving apparatus in the embodiments of this application. For details, refer to FIG. 6. An optical transmitting apparatus 600 in an embodiment of this application includes a sending module 601, a receiving module 602, and a processing module 603. The apparatus 600 may be the first optical module in the foregoing method embodiments, or may be one or more chips in the first optical module. The apparatus 600 may be configured to perform some or all functions of the first optical module in the foregoing method embodiments.

For example, the sending module 601 may be configured to perform step 301 in the foregoing method embodiments, or configured to perform step 304 in the foregoing method embodiments. For example, the sending module 601 is configured to send a first optical signal to a second optical module, where the first optical signal carries query information, and the query information is used to indicate the second optical module to feed back a receive optical power value for the first optical signal.

The receiving module 602 may be configured to perform the receiving step in step 302 in the foregoing method embodiments. For example, the receiving module 602 is configured to receive the receive optical power value sent by the second optical module.

The processing module 603 may be configured to perform step 303 in the foregoing method embodiments. For example, the processing module 603 is configured to determine second transmit optical power based on the receive optical power value.

The sending module 601 is configured to send a second optical signal to the second optical module based on the second transmit optical power.

Optionally, the processing module 603 is specifically configured to: when the receive optical power value is greater than an enabling threshold, roll back first transmit optical power by a target value to obtain the second transmit optical power; when the receive optical power value is less than a disabling threshold, restore the first transmit optical power to initial transmit optical power, where the initial transmit optical power is used as the second transmit optical power, and the initial transmit optical power is transmit optical power on which the first optical module performs no rollback; or when the receive optical power value is greater than or equal to the disabling threshold and less than or equal to the enabling threshold, use the first transmit optical power as the second transmit optical power.

Optionally, the processing module 603 is further configured to roll back, when the first optical module is powered on, initial transmit optical power based on a preset value to obtain preset transmit optical power, where the preset transmit optical power is used as transmit optical power of the first optical module in an initial running state.

Optionally, the apparatus 600 further includes a storage module. The storage module is coupled to the processing module, so that the processing module can execute computer-executable instructions stored in the storage module, to implement functions of the first optical module in the foregoing method embodiments. In an example, the storage module optionally included in the apparatus 600 may be a storage unit in a chip, for example, a register or a cache. The storage module may alternatively be a storage unit that is located outside the chip, for example, a read-only memory (read-only memory, ROM for short), another type of static storage device that can store static information and instructions, or a random access memory (random access memory, RAM for short).

It should be understood that a procedure performed by the modules of the optical transmitting apparatus in the embodiment corresponding to FIG. 6 is similar to the procedure performed by the first optical module in the method embodiments corresponding to FIG. 2 to FIG. 5. Details are not described herein again.

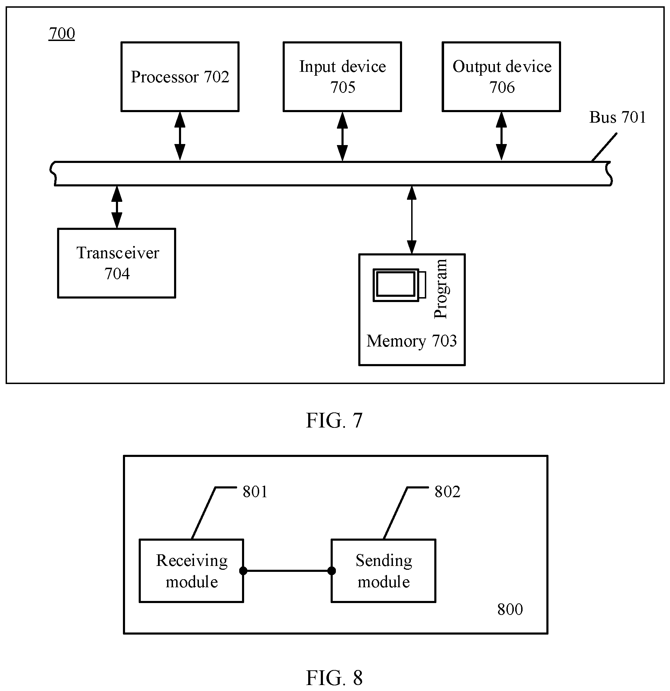

FIG. 7 is a possible schematic diagram of a structure of an optical transmitting apparatus 700 according to the foregoing embodiments. The apparatus 700 may be configured as the foregoing first optical module. The apparatus 700 may include a processor 702, a computer-readable storage medium/memory 703, a transceiver 704, an input device 705, an output device 706, and a bus 701. The processor, the transceiver, the computer-readable storage medium, and the like are connected via the bus. A specific connection medium between the foregoing components is not limited in this embodiment of this application.

In an example, the transceiver 704 sends a first optical signal to a second optical module based on first transmit optical power, where the first optical signal carries query information, and the query information is used to indicate the second optical module to feed back a receive optical power value for the first optical signal; and receives the receive optical power value sent by the second optical module.

The processor 702 determines second transmit optical power based on the receive optical power value.

The transceiver 704 sends a second optical signal to the second optical module based on the second transmit optical power.

The transceiver 704 and the processor 702 may implement corresponding steps in any one of the embodiments in FIG. 2 to FIG. 5. Details are not described herein again.

It may be understood that FIG. 7 shows only a simplified design of the first optical module. In an actual application, the first optical module may include any quantity of transceivers, processors, memories, and the like, and all first optical modules that can implement this application fall within the protection scope of this application.

The processor 702 in the apparatus 700 may be a general-purpose processor, for example, a general-purpose central processing unit (CPU), a network processor (network processor, NP), or a microprocessor, or may be an application-specific integrated circuit (application-specific integrated circuit, ASIC) or one or more integrated circuits configured to control program execution of the solutions of this application. Alternatively, the processor 702 may be a digital signal processor (digital signal processor, DSP), a field-programmable gate array (field-programmable gate array, FPGA) or another programmable logic device, a discrete gate or a transistor logic device, or a discrete hardware component. Alternatively, a controller/the processor may be a combination of processors implementing a computing function, for example, a combination of one or more microprocessors or a combination of the DSP and the microprocessor. The processor usually performs logical and arithmetic operations based on program instructions stored in the memory.

The bus 701 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one thick line is used to represent the bus in FIG. 7, but this does not mean that there is only one bus or only one type of bus.

The computer-readable storage medium/memory 703 may further store an operating system and another application program. Specifically, the program may include program code, and the program code includes computer operation instructions. More specifically, the memory may be a read-only memory (read-only memory, ROM), another type of static storage device that can store static information and instructions, a random access memory (random access memory, RAM), another type of dynamic storage device that can store information and instructions, a magnetic disk memory, or the like. The memory 703 may be a combination of the foregoing memories. In addition, the computer-readable storage medium/memory may be located in the processor, may be located outside the processor, or may be distributed in a plurality of entities including the processor or a processing circuit. The computer-readable storage medium/memory may be specifically embodied in a computer program product. For example, the computer program product may include a computer-readable medium in a packaging material.

Alternatively, an embodiment of this application further provides a universal processing system. For example, the universal processing system is usually referred to as a chip. The universal processing system includes one or more microprocessors that provide a processor function and an external memory that provides at least a part of a storage medium. All these components are connected to other supporting circuits by using an external bus architecture. When instructions stored in the memory are executed by the processor, the processor is enabled to perform some or all of the steps of the optical power adjustment method performed by the first optical module in the embodiments of FIG. 2 to FIG. 5, for example, step 301, step 303, and step 304 in FIG. 3, and/or another process of the technology described in this application.

The method or algorithm steps described with reference to the content disclosed in this application may be implemented by hardware, or may be implemented by a processor executing software instructions. The software instructions may include a corresponding software module. The software module may be located in a RAM, a flash, a ROM, an EPROM, an EEPROM, a register, a hard disk, a removable magnetic disk, a CD-ROM, or a storage medium of any other form known in the art. For example, a storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in user equipment. Certainly, the processor and the storage medium may exist as discrete components in the user equipment.

For details, refer to FIG. 8. An optical receiving apparatus 800 in an embodiment of this application includes a receiving module 801 and a sending module 802. The apparatus 800 may be the second optical module in the foregoing method embodiments, or may be one or more chips in the second optical module. The apparatus 800 may be configured to perform some or all functions of the second optical module in the foregoing method embodiments.

For example, the receiving module 801 may be configured to perform the receiving step in step 301 in the foregoing method embodiments, or configured to perform step 302 in the foregoing method embodiments. For example, the receiving module 801 is configured to receive a first optical signal that is sent by a first optical module based on first transmit optical power, where the first optical signal carries query information, and the query information is used to indicate the second optical module to feed back a receive optical power value for the first optical signal.

The sending module 802 may be configured to perform step 302 in the foregoing method embodiments. For example, the sending module 802 sends the receive optical power value to the first optical module.

The receiving module 801 may be configured to perform the receiving step in step 304 in the foregoing method embodiments. For example, the receiving module 801 is configured to receive a second optical signal, where the second optical signal is sent by the first optical module based on second transmit optical power, and the second transmit optical power is determined by the first optical module based on the receive optical power value.

Optionally, the apparatus 800 further includes a storage module. The storage module is coupled to the processing module, so that the processing module can execute computer-executable instructions stored in the storage module, to implement functions of the second optical module in the foregoing method embodiments. In an example, the storage module optionally included in the apparatus 800 may be a storage unit in a chip, for example, a register or a cache. The storage module may alternatively be a storage unit that is located outside the chip, for example, a read-only memory (read-only memory, ROM for short), another type of static storage device that can store static information and instructions, or a random access memory (random access memory, RAM for short).

It should be understood that a procedure performed by the modules of the optical receiving apparatus in the embodiment corresponding to FIG. 8 is similar to the procedure performed by the second optical module in the method embodiments corresponding to FIG. 2 to FIG. 5. Details are not described herein again.

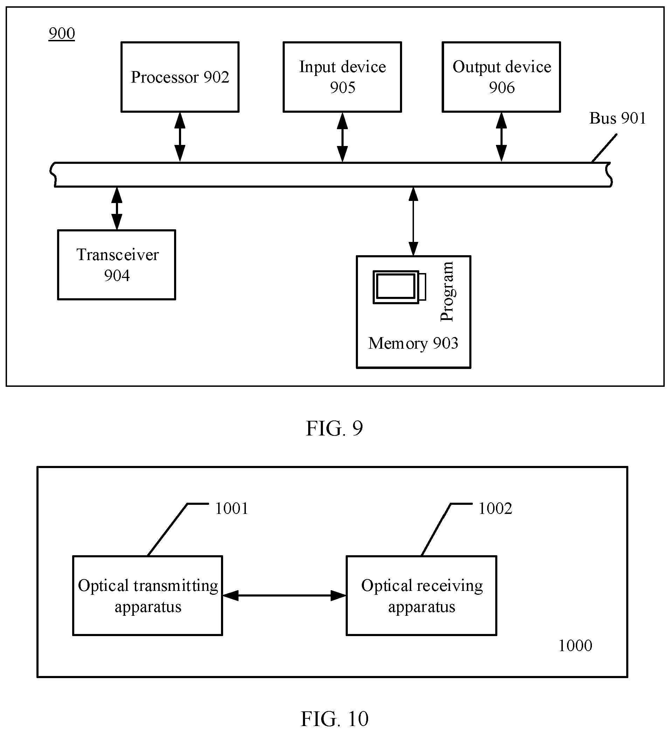

FIG. 9 is a possible schematic diagram of a structure of an optical receiving apparatus 900 according to the foregoing embodiments. The apparatus 900 may be configured as the foregoing second optical module. The apparatus 900 may include a processor 902, a computer-readable storage medium/memory 903, a transceiver 904, an input device 905, an output device 906, and a bus 901. The processor, the transceiver, the computer-readable storage medium, and the like are connected via the bus. A specific connection medium between the foregoing components is not limited in this embodiment of this application.

In an example, the transceiver 904 receives a first optical signal that is sent by a first optical module based on first transmit optical power, where the first optical signal carries query information, and the query information is used to indicate the second optical module to feed back a receive optical power value for the first optical signal; sends the receive optical power value to the first optical module; and receives a second optical signal, where the second optical signal is sent by the first optical module based on second transmit optical power, and the second transmit optical power is determined by the first optical module based on the receive optical power value.

The transceiver 904 and the processor 902 may implement corresponding steps in any one of the embodiments in FIG. 2 to FIG. 5. Details are not described herein again.

It may be understood that FIG. 9 shows only a simplified design of the second optical module. In an actual application, the second optical module may include any quantity of transceivers, processors, memories, and the like, and all second optical modules that can implement this application fall within the protection scope of this application.

The processor 902 in the apparatus 900 may be a general-purpose processor, for example, a general-purpose central processing unit (CPU), a network processor (network processor, NP), or a microprocessor, or may be an application-specific integrated circuit (application-specific integrated circuit, ASIC) or one or more integrated circuits configured to control program execution of the solutions of this application. Alternatively, the processor 902 may be a digital signal processor (digital signal processor, DSP), a field-programmable gate array (field-programmable gate array, FPGA) or another programmable logic device, a discrete gate or a transistor logic device, or a discrete hardware component. Alternatively, a controller/the processor may be a combination of processors implementing a computing function, for example, a combination of one or more microprocessors, or a combination of the DSP and the microprocessor. The processor usually performs logical and arithmetic operations based on program instructions stored in the memory.

The bus 901 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one thick line is used to represent the bus in FIG. 9, but this does not mean that there is only one bus or only one type of bus.

The computer-readable storage medium/memory 903 may further store an operating system and another application program. Specifically, the program may include program code, and the program code includes computer operation instructions. More specifically, the memory may be a read-only memory (read-only memory, ROM), another type of static storage device that can store static information and instructions, a random access memory (random access memory, RAM), another type of dynamic storage device that can store information and instructions, a magnetic disk memory, or the like. The memory 903 may be a combination of the foregoing memories. In addition, the computer-readable storage medium/memory may be located in the processor, may be located outside the processor, or may be distributed in a plurality of entities including the processor or a processing circuit. The computer-readable storage medium/memory may be specifically embodied in a computer program product. For example, the computer program product may include a computer-readable medium in a packaging material.

Alternatively, an embodiment of this application further provides a universal processing system. For example, the universal processing system is usually referred to as a chip. The universal processing system includes one or more microprocessors that provide a processor function and an external memory that provides at least a part of a storage medium. All these components are connected to other supporting circuits by using an external bus architecture. When instructions stored in the memory are executed by the processor, the processor is enabled to perform some or all of the steps of the optical power adjustment method performed by the first optical module in the embodiments of FIG. 2 to FIG. 5, for example, step 302 in FIG. 3, and/or another process of the technology described in this application. The method or algorithm steps described with reference to the content disclosed in this application may be implemented by hardware, or may be implemented by a processor executing software instructions. The software instructions may include a corresponding software module. The software module may be located in a RAM, a flash memory, a ROM memory, an EPROM memory, an EEPROM memory, a register, a hard disk, a removable magnetic disk, a CD-ROM, or a storage medium of any other form known in the art. For example, a storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in user equipment. Certainly, the processor and the storage medium may exist as discrete components in the user equipment.

Specifically, refer to FIG. 10. FIG. 10 shows an embodiment of an optical transmission system 1000 according to the embodiments of this application. The optical transmission system 1000 includes an optical transmitting apparatus 1001 and an optical receiving apparatus 1002 described in the foregoing embodiments. Details are not described herein again.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, in other words, may be located in one location, or may be distributed on a plurality of network units. Some or all of the units may be selected based on actual requirements to achieve the objectives of the solutions in the embodiments.

In addition, functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments without departing from the and scope of the technical solutions of the embodiments of this application.

## Claims

1. An optical power adjustment method, comprising:
sending (301), by a first optical module, a first optical signal to a second optical module at a first transmit optical power, wherein the first optical signal carries query information, the query information is carried by a pilot tone signal, the pilot tone signal is comprised in the first optical signal, and the query information is used to indicate the second optical module to feed back a receive optical power value for the first optical signal;
receiving (302), by the first optical module, the receive optical power value sent by the second optical module;
determining (303), by the first optical module, second transmit optical power based on the receive optical power value; and
sending (304), by the first optical module, a second optical signal to the second optical module at the second transmit optical power.

2. The method according to claim 1, wherein the determining (303), by the first optical module, second transmit optical power based on the receive optical power value comprises:
rolling back, by the first optical module when the receive optical power value is greater than an enabling threshold, the first transmit optical power by a target value to obtain the second transmit optical power;
restoring, by the first optical module, the first transmit optical power to initial transmit optical power when the receive optical power value is less than a disabling threshold, wherein the initial transmit optical power is used as the second transmit optical power, and the initial transmit optical power is transmit optical power on which the first optical module performs no rollback; or
using, by the first optical module, the first transmit optical power as the second transmit optical power when the receive optical power value is greater than or equal to the disabling threshold and less than or equal to the enabling threshold.

3. The method according to claim 2, wherein the target value is a preset value; or
the target value is an adjustment value determined by the first optical module based on the receive optical power value.

4. The method according to claim 1, wherein the method further comprises:
rolling back, by the first optical module when the first optical module is powered on, initial transmit optical power based on a preset value to obtain preset transmit optical power, wherein the preset transmit optical power is used as transmit optical power of the first optical module in an initial running state.

5. An optical power adjustment method, comprising:
receiving (301), by a second optical module, a first optical signal that is sent by a first optical module at a first transmit optical power, wherein the first optical signal carries query information, the query information is carried by a pilot tone signal, the pilot tone signal is comprised in the first optical signal, and the query information is used to indicate the second optical module to feed back a receive optical power value for the first optical signal;
sending (302), by the second optical module, the receive optical power value to the first optical module; and
receiving (304), by the second optical module, a second optical signal, wherein the second optical signal is sent by the first optical module at a second transmit optical power, and the second transmit optical power is determined by the first optical module based on the receive optical power value.

6. An optical transmitting apparatus (600), comprising:
a sending module (601), configured to send (301) a first optical signal to a second optical apparatus at a first transmit optical power, wherein the first optical signal carries query information, the query information is carried by a pilot tone signal, the pilot tone signal is comprised in the first optical signal, and the query information is used to indicate the second optical apparatus to feed back a receive optical power value for the first optical signal;
a receiving module (602), configured to receive (302) the receive optical power value sent by the second optical apparatus upon transmission of the query information; and
a processing module (603), configured to determine (303) second transmit optical power based on the received optical power value, wherein
the sending module (601) is configured to send (304) a second optical signal to the second optical apparatus at the second transmit optical power.

7. The apparatus (600) according to claim 6, wherein the processing module (603) is specifically configured to: when the receive optical power value is greater than an enabling threshold, roll back the first transmit optical power by a target value to obtain the second transmit optical power;
when the receive optical power value is less than a disabling threshold, restore the first transmit optical power to initial transmit optical power, wherein the initial transmit optical power is used as the second transmit optical power, and the initial transmit optical power is transmit optical power on which the optical transmitting apparatus performs no rollback; or
when the receive optical power value is greater than or equal to the disabling threshold and less than or equal to the enabling threshold, use the first transmit optical power as the second transmit optical power.

8. The apparatus (600) according to claim 7, wherein the target value is a preset value; or
the target value is an adjustment value determined by the optical transmitting apparatus based on the receive optical power value.

9. The apparatus (600) according to claim 6, wherein the processing module (603) is further configured to roll back, when the optical transmitting apparatus is powered on, initial transmit optical power based on a preset value to obtain preset transmit optical power, wherein the preset transmit optical power is used as transmit optical power of the optical transmitting apparatus in an initial running state.

10. An optical receiving apparatus (800), comprising:
a receiving module (801), configured to receive (301) a first optical signal that is sent by a first optical apparatus at a first transmit optical power, wherein the first optical signal carries query information, the query information is carried by a pilot tone signal, the pilot tone signal is comprised in the first optical signal, and the query information is used to indicate the optical receiving apparatus to feed back a receive optical power value for the first optical signal; wherein the receiving module (801) is configured to obtain the query information from the received signal; and
a sending module (802), configured to upon reception of the query information send (302) the receive optical power value to the first optical apparatus,
wherein
the receiving module (801) is configured to receive (304) a second optical signal, wherein the second optical signal is sent by the first optical apparatus at a second transmit optical power, and the second transmit optical power is determined by the first optical apparatus based on the receive optical power value.

11. An optical transmitting apparatus (700), comprising at least one processor (702) and a memory (703), wherein the memory (703) stores a computer-readable program, and the processor (702) runs the program in the memory (703) to complete the method according to any one of claims 1 to 4.

12. An optical receiving apparatus (900), comprising at least one processor (902) and a memory (903), wherein the memory (903) stores a computer-readable program, and the processor (902) runs the program in the memory (903) to complete the method according to claim 5.

13. An optical transmission system (1000), comprising the optical transmitting apparatus (1001) according to any one of claims 6 to 9 and the optical receiving apparatus (1002) according to claim 10.

14. A computer-readable storage medium, wherein the computer storage medium stores computer instructions, and the computer instructions are used to perform the method according to any one of claims 1 to 4 or claim 5.

15. A computer program product comprising instructions, wherein when a computer program product runs on the device of claim 6 or claim 10 respectively, the device is enabled to perform the method according to any one of claims 1 to 4 or claim 5 respectively.

## Patentansprüche

1. Verfahren zum Anpassen einer optischen Leistung, das umfasst:
Senden (301), durch ein erstes optisches Modul, eines ersten optischen Signals an ein zweites optisches Modul mit einer ersten optischen Übertragungsleistung, wobei das erste optische Signal Abfrageinformationen trägt, die Abfrageinformationen von einem Pilottonsignal getragen werden, das Pilottonsignal in dem ersten optischen Signal enthalten ist, und die Abfrageinformationen verwendet werden, um dem zweiten optischen Modul anzugeben, einen optischen Empfangsleistungswert für das erste optische Signal zurückzumelden;
Empfangen (302), durch das erste optische Modul, des optischen Empfangsleistungswerts, der von dem zweiten optischen Modul gesendet wird;
Bestimmen (303), durch das erste optische Modul, einer zweiten optischen Übertragungsleistung basierend auf dem optischen Empfangsleistungswert; und
Senden (304), durch das erste optische Modul, eines zweiten optischen Signals zu dem zweiten optischen Modul mit der zweiten optischen Übertragungsleistung.

2. Verfahren nach Anspruch 1, wobei das Bestimmen (303), durch das erste optische Modul, einer zweiten optischen Übertragungsleistung basierend auf dem optischen Empfangsleistungswert umfasst:
Zurücksetzen, durch das erste optische Modul, wenn der optische Empfangsleistungswert größer als ein Aktivierungsschwellenwert ist, der ersten optischen Übertragungsleistung um einen Zielwert, um die zweite optische Übertragungsleistung zu erhalten;
Wiederherstellen, durch das erste optische Modul, der ersten optische Übertragungsleistung auf anfängliche optische Übertragungsleistung, wenn der Empfangsoptikleistungswert geringer als ein Deaktivierungsschwellenwert ist, wobei die anfängliche optische Übertragungsleistung als die zweite optische Übertragungsleistung verwendet wird, und die anfängliche optische Übertragungsleistung eine optische Übertragungsleistung ist, an der das erste optische Modul kein Zurücksetzen durchführt; oder
Verwenden, durch das erste optische Modul, der ersten optischen Übertragungsleistung als die zweite optische Übertragungsleistung, wenn der optische Empfangsleistungswert größer als oder gleich dem Deaktivierungsschwellenwert und kleiner als oder gleich dem Aktivierungsschwellenwert ist.

3. Verfahren nach Anspruch 2, wobei der Zielwert ein voreingestellter Wert ist; oder der Zielwert ein Anpassungswert ist, der von dem ersten optischen Modul basierend auf dem optischen Empfangsleistungswert bestimmt wird.

4. Verfahren nach Anspruch 1, wobei das Verfahren ferner umfasst:
Zurücksetzen, durch das erste optische Modul, wenn das erste optische Modul eingeschaltet ist, einer anfänglichen optischen Übertragungsleistung basierend auf einem voreingestellten Wert, um eine voreingestellte optische Übertragungsleistung zu erhalten, wobei die voreingestellte optische Übertragungsleistung als optische Übertragungsleistung des ersten optischen Moduls in einem anfänglichen Betriebszustand verwendet wird.

5. Verfahren zum Anpassen einer optischen Leistung, das umfasst:
Empfangen (301), durch ein zweites optisches Modul, eines ersten optischen Signals, das von einem ersten optischen Modul mit einer ersten optischen Übertragungsleistung gesendet wird, wobei das erste optische Signal Abfrageinformationen trägt, die Abfrageinformationen von einem Pilottonsignal getragen werden, das Pilottonsignal in dem ersten optischen Signal enthalten ist, und die Abfrageinformationen verwendet werden, um dem zweiten optischen Modul anzugeben, einen optischen Empfangsleistungswert für das erste optische Signal zurückzumelden;
Senden (302), durch das zweite optische Modul, des optischen Empfangsleistungswerts an das erste optische Modul; und
Empfangen (304), durch das zweite optische Modul, eines zweiten optischen Signals, wobei das zweite optische Signal von dem ersten optischen Modul mit einer zweiten optischen Übertragungsleistung gesendet wird, und die zweite optische Übertragungsleistung von dem ersten optischen Modul basierend auf dem optischen Empfangsleistungswert bestimmt wird.

6. Optische Übertragungseinrichtung (600), die umfasst:
ein Sendemodul (601), das konfiguriert ist, um (301) ein erstes optisches Signal an eine zweite optische Einrichtung mit einer ersten optischen Übertragungsleistung zu senden, wobei das erste optische Signal Abfrageinformationen trägt, die Abfrageinformationen von einem Pilottonsignal getragen werden, das Pilottonsignal in dem ersten optischen Signal enthalten ist, und die Abfrageinformationen verwendet werden, um dem zweiten optischen Modul anzugeben, einen optischen Empfangsleistungswert für das erste optische Signal zurückzumelden;
ein Empfangsmodul (602), das konfiguriert ist, um (302) den optischen Empfangsleistungswert zu empfangen, der von der zweiten optischen Einrichtung bei Übertragung der Abfrageinformation gesendet wird; und
ein Verarbeitungsmodul (603), das konfiguriert ist, um (303) eine zweite optische Übertragungsleistung basierend auf dem empfangenen optischen Leistungswert zu bestimmen, wobei
das Sendemodul (601) konfiguriert ist, um (304) ein zweites optisches Signal an die zweite optische Einrichtung mit der zweiten optischen Übertragungsleistung zu senden.

7. Einrichtung (600) nach Anspruch 6, wobei das Verarbeitungsmodul (603) spezifisch konfiguriert ist zum: wenn der optische Empfangsleistungswert größer als ein Aktivierungsschwellenwert ist, Zurücksetzen der ersten optischen Übertragungsleistung um einen Zielwert, um die zweite optische Übertragungsleistung zu erhalten;
wenn der optische Empfangsleistungswert geringer als ein Deaktivierungsschwellenwert ist, Wiederherstellen der ersten optischen Übertragungsleistung auf eine anfängliche optische Übertragungsleistung, wobei die anfängliche optische Übertragungsleistung als die zweite optische Übertragungsleistung verwendet wird, und die anfängliche optische Übertragungsleistung eine optische Übertragungsleistung ist, an der die optische Übertragungseinrichtung kein Zurücksetzen durchführt; oder
wenn der optische Empfangsleistungswert größer als oder gleich dem Deaktivierungsschwellenwert und kleiner als oder gleich dem Aktivierungsschwellenwert ist, Verwenden der ersten optischen Übertragungsleistung als die zweite optische Übertragungsleistung.

8. Einrichtung (600) nach Anspruch 7, wobei der Zielwert ein voreingestellter Wert ist; oder der Zielwert ein Anpassungswert ist, der von der optischen Übertragungseinrichtung basierend auf dem optischen Empfangsleistungswert bestimmt wird.

9. Einrichtung (600) nach Anspruch 6, wobei das Verarbeitungsmodul (603) ferner konfiguriert ist, um, wenn die optische Übertragungseinrichtung eingeschaltet ist, eine anfängliche optische Übertragungsleistung basierend auf einem voreingestellten Wert zurückzusetzen, um eine voreingestellte optische Übertragungsleistung zu erhalten, wobei die voreingestellte optische Übertragungsleistung als optische Übertragungsleistung der optischen Übertragungseinrichtung in einem anfänglichen Betriebszustand verwendet wird.

10. Optische Empfangseinrichtung (800), die umfasst:
ein Empfangsmodul (801), das konfiguriert ist, um (301) ein erstes optisches Signal, das von einer ersten optischen Einrichtung mit einer ersten optischen Übertragungsleistung gesendet wurde, zu empfangen, wobei das erste optische Signal Abfrageinformationen trägt, die Abfrageinformationen von einem Pilottonsignal getragen werden, das Pilottonsignal in dem ersten optischen Signal enthalten ist, und die Abfrageinformationen verwendet werden, um dem zweiten optischen Modul anzugeben, einen optischen Empfangsleistungswert für das erste optische Signal zurückzumelden; wobei das Empfangsmodul (801) konfiguriert ist,
um die Abfrageinformationen aus dem empfangenen Signal zu erhalten; und
ein Sendemodul (802), das beim Empfang der Abfrageinformationen konfiguriert ist zum Senden (302) des optischen Empfangsleistungswerts an die erste optische Einrichtung, wobei
das Empfangsmodul (801) konfiguriert ist, um ein zweites optisches Signal zu empfangen (304), wobei das zweite optische Signal von der ersten optischen Einrichtung mit einer zweiten optischen Übertragungsleistung gesendet wird, und die zweite optische Übertragungsleistung von der ersten optischen Einrichtung basierend auf dem optischen Empfangsleistungswert bestimmt wird.

11. Optische Übertragungseinrichtung (700), die mindestens einen Prozessor (702) und einen Speicher (703) umfasst, wobei der Speicher (703) ein computerlesbares Programm speichert, und der Prozessor (702) das Programm in dem Speicher (703) ausführt, um das Verfahren nach einem der Ansprüche 1 bis 4 durchzuführen.

12. Optische Empfangseinrichtung (900), die mindestens einen Prozessor (902) und einen Speicher (903) umfasst, wobei der Speicher (903) ein computerlesbares Programm speichert, und der Prozessor (902) das Programm in dem Speicher (903) ausführt, um das Verfahren nach Anspruch 5 durchzuführen.

13. Optisches Übertragungssystem (1000), das die optische Übertragungseinrichtung (1001) nach einem der Ansprüche 6 bis 9 und die optische Empfangseinrichtung (1002) nach Anspruch 10 umfasst.

14. Computerlesbares Speicherungsmedium, wobei das Computerspeicherungsmedium Computeranweisungen speichert und die Computeranweisungen verwendet werden, um das Verfahren nach einem der Ansprüche 1 bis 4 oder nach Anspruch 5 durchzuführen.

15. Computerprogrammprodukt, das Anweisungen umfasst, wobei, wenn ein Computerprogrammprodukt auf der Vorrichtung nach Anspruch 6 bzw. nach Anspruch 10 abläuft, der Computer aktiviert wird, um das Verfahren nach einem der Ansprüche 1 bis 4 bzw. nach Anspruch 5 durchzuführen.

## Revendications

1. Procédé d'ajustement de puissance optique, comprenant :
l'envoi (301), par un premier module optique, d'un premier signal optique à un second module optique à une première puissance optique de transmission, dans lequel le premier signal optique transporte des informations de requête, les informations de requête sont transportées par un signal de tonalité pilote, le signal de tonalité pilote est compris dans le premier signal optique et les informations de requête sont utilisées pour indiquer au second module optique de renvoyer une valeur de puissance optique de réception pour le premier signal optique ;
la réception (302), par le premier module optique, de la valeur de puissance optique de réception envoyée par le second module optique ;
la détermination (303), par le premier module optique, d'une seconde puissance optique de transmission sur la base de la valeur de puissance optique de réception ; et
l'envoi (304), par le premier module optique, d'un second signal optique au second module optique à la seconde puissance optique de transmission.

2. Procédé selon la revendication 1, dans lequel la détermination (303), par le premier module optique, d'une seconde puissance optique de transmission sur la base de la valeur de puissance optique de réception comprend :
la réduction, par le premier module optique, lorsque la valeur de puissance optique de réception est supérieure à un seuil d'activation, de la première puissance optique de transmission à une valeur cible afin d'obtenir la seconde puissance optique de transmission ;
le rétablissement, par le premier module optique, de la première puissance optique de transmission à une puissance optique de transmission initiale lorsque la valeur de puissance optique de réception est inférieure à un seuil de désactivation, dans lequel la puissance optique de transmission initiale est utilisée comme seconde puissance optique de transmission et la puissance optique de transmission initiale est une puissance optique de transmission à laquelle le premier module optique ne réalise pas de réduction ; ou
l'utilisation, par le premier module optique, de la première puissance optique de transmission comme seconde puissance optique de transmission lorsque la valeur de puissance optique de réception est supérieure ou égale au seuil de désactivation et inférieure ou égale au seuil d'activation.

3. Procédé selon la revendication 2, dans lequel la valeur cible est une valeur prédéfinie ; ou
la valeur cible est une valeur d'ajustement déterminée par le premier module optique sur la base de la valeur de puissance optique de réception.

4. Procédé selon la revendication 1, dans lequel le procédé comprend en outre :
la réduction, par le premier module optique, lorsque le premier module optique est mis sous tension, d'une puissance optique de transmission initiale sur la base d'une valeur prédéfinie pour obtenir une puissance optique de transmission prédéfinie, dans lequel la puissance optique de transmission prédéfinie est utilisée comme puissance optique de transmission du premier module optique dans un état de fonctionnement initial.

5. Procédé d'ajustement de puissance optique, comprenant :
la réception (301), par un second module optique, d'un premier signal optique qui est envoyé par un premier module optique à une première puissance optique de transmission, dans lequel le premier signal optique transporte des informations de requête, les informations de requête sont transportées par un signal de tonalité pilote,
le signal de tonalité pilote est compris dans le premier signal optique et les informations de requête sont utilisées pour indiquer au second module optique de renvoyer une valeur de puissance optique de réception pour le premier signal optique ;
l'envoi (302), par le second module optique, de la valeur de puissance optique de réception au premier module optique ; et
la réception (304), par le second module optique, d'un second signal optique, dans lequel le second signal optique est envoyé par le premier module optique à une seconde puissance optique de transmission, et la seconde puissance optique de transmission est déterminée par le premier module optique sur la base de la valeur de puissance optique de réception.

6. Appareil de transmission optique (600), comprenant :
un module d'envoi (601) configuré pour envoyer (301) un premier signal optique à un second appareil optique à une première puissance optique de transmission, dans lequel le premier signal optique transporte des informations de requête, les informations de requête sont transportées par un signal de tonalité pilote, le signal de tonalité pilote est compris dans le premier signal optique et les informations de requête sont utilisées pour indiquer au second appareil optique de renvoyer une valeur de puissance optique de réception pour le premier signal optique ;
un module de réception (602) configuré pour recevoir (302) la valeur de puissance optique de réception envoyée par le second appareil optique lors d'une transmission des informations de requête ; et
un module de traitement (603) configuré pour déterminer (303) une seconde puissance optique de transmission sur la base de la valeur de puissance optique reçue, dans lequel
le module d'envoi (601) est configuré pour envoyer (304) un second signal optique au second appareil optique à la seconde puissance optique de transmission.

7. Appareil (600) selon la revendication 6, dans lequel le module de traitement (603) est spécifiquement configuré pour : lorsque la valeur de puissance optique de réception est supérieure à un seuil d'activation, réduire la première puissance optique de transmission à une valeur cible pour obtenir la seconde puissance optique de transmission ;
lorsque la valeur de puissance optique de réception est inférieure à un seuil de désactivation, rétablir la première puissance optique de transmission à une puissance optique de transmission initiale, dans lequel la puissance optique de transmission initiale est utilisée comme seconde puissance optique de transmission, et la puissance optique de transmission initiale est une puissance optique de transmission à laquelle l'appareil de transmission optique ne réalise pas de réduction ; ou
lorsque la valeur de puissance optique de réception est supérieure ou égale au seuil de désactivation et inférieure ou égale au seuil d'activation, utiliser la première puissance optique de transmission comme seconde puissance optique de transmission.

8. Appareil (600) selon la revendication 7, dans lequel la valeur cible est une valeur prédéfinie ; ou
la valeur cible est une valeur d'ajustement déterminée par l'appareil de transmission optique sur la base de la valeur de puissance optique de réception.

9. Appareil (600) selon la revendication 6, dans lequel le module de traitement (603) est en outre configuré pour réduire, lorsque l'appareil de transmission optique est mis sous tension, une puissance optique de transmission initiale sur la base d'une valeur prédéfinie pour obtenir une puissance optique de transmission prédéfinie, dans lequel la puissance optique de transmission prédéfinie est utilisée comme puissance optique de transmission de l'appareil de transmission optique dans un état de fonctionnement initial.

10. Appareil de réception optique (800), comprenant :
un module de réception (801) configuré pour recevoir (301) un premier signal optique qui est envoyé par un premier appareil optique à une première puissance optique de transmission, dans lequel le premier signal optique transporte des informations de requête, les informations de requête sont transportées par un signal de tonalité pilote,
le signal de tonalité pilote est compris dans le premier signal optique et les informations de requête sont utilisées pour indiquer à l'appareil de réception optique de renvoyer une valeur de puissance optique de réception pour le premier signal optique ; dans lequel le module de réception (801) est configuré pour obtenir les informations de requête à partir du signal reçu ; et
un module d'envoi (802) configuré pour, lors d'une réception des informations de requête,
envoyer (302) la valeur de puissance optique de réception au premier appareil optique, dans lequel
le module de réception (801) est configuré pour recevoir (304) un second signal optique, dans lequel le second signal optique est envoyé par le premier appareil optique à une seconde puissance optique de transmission, et la seconde puissance optique de transmission est déterminée par le premier appareil optique sur la base de la valeur de puissance optique de réception.

11. Appareil de transmission optique (700), comprenant au moins un processeur (702) et une mémoire (703), dans lequel la mémoire (703) stocke un programme lisible par ordinateur, et le processeur (702) exécute le programme dans la mémoire (703) pour achever le procédé selon l'une quelconque des revendications 1 à 4.

12. Appareil de réception optique (900), comprenant au moins un processeur (902) et une mémoire (903), dans lequel la mémoire (903) stocke un programme lisible par ordinateur, et le processeur (902) exécute le programme dans la mémoire (903) pour achever le procédé selon la revendication 5.

13. Système de transmission optique (1000), comprenant l'appareil de transmission optique (1001) selon l'une quelconque des revendications 6 à 9 et l'appareil de réception optique (1002) selon la revendication 10.

14. Support de stockage lisible par ordinateur, dans lequel le support de stockage informatique stocke des instructions informatiques, et les instructions informatiques sont utilisées pour réaliser le procédé selon l'une quelconque des revendications 1 à 4 ou selon la revendication 5.

15. Produit-programme informatique comprenant des instructions, dans lequel, lorsqu'un produit-programme informatique est exécuté sur le dispositif selon la revendication 6 ou selon la revendication 10, respectivement, le dispositif est activé pour réaliser le procédé selon l'une quelconque des revendications 1 à 4 ou selon la revendication 5, respectivement.
